# FASCICULE DE BREVET EUROPEEN

(11) **EP 4 183 955 B1**
(45) Date de publication et mention de la délivrance du brevet: **15.07.2026**
(21) Numéro de dépôt: 21210075.4
(22) Date de dépôt: 23.11.2021
(51) Int. Cl.: E04H 4/16

(54) **ASPIRATEUR AUTONOME À HÉLICE POUR LE NETTOYAGE DE PISCINES**
AUTONOMER PROPELLERSAUGER FÜR DIE REINIGUNG VON SCHWIMMBÄDERN
AUTONOMOUS VACUUM CLEANER WITH PROPELLER FOR CLEANING SWIMMING POOLS

(43) Date de publication de la demande: 24.05.2023
(73) Titulaire: Kokido Development Limited, 999077 Kowloon (HK)
(72) Inventeur: BRUNEEL, Jean, 999077 Kowloon (HK); ROUMAGNAC, Max, 33127 Martignas sur Jalle (FR)
(74) Mandataire: Santarelli

(56) Documents cités:
- FR-A1- 3 095 827
- US-A- 3 755 843
- US-A1- 2020 061 502

## Description

### DOMAINE TECHNIQUE

La présente invention appartient au domaine des dispositifs d'entretien de piscines et analogues, notamment des balais et robots aspirateurs submersibles, et concerne plus particulièrement un aspirateur autonome à hélice, présentant une taille réduite adaptée aux bassins de faible profondeur.

### ÉTAT DE L'ART

Pour bien entretenir les piscines et retirer les débris qui s'accumulent à leurs fonds, il existe plusieurs types d'aspirateurs à hélice alimentés par une batterie et pourvus d'une poche filtrante. De tels aspirateurs, dits autonomes, sont par exemple décrits dans les documents US5768734 (Dietrich) et US2016273238 (Heffernan). D'autres encore, développés par les présents inventeurs, sont décrits dans les documents FR3080879 (Kokido) et EP3832053 (Kokido). Le document US2020/061502A montre un aspirateur submersible pour le nettoyage des piscines qui comprend les caractéristiques du préambule de la revendication 1.

Selon les modèles, la batterie est soit embarquée dans l'aspirateur, auquel cas elle est destinée à être immergée dans l'eau de la piscine, soit séparée de l'aspirateur et placée en dehors de la piscine en étant reliée à ce dernier par des câbles de liaison électrique.

Ces aspirateurs se distinguent également les uns des autres par la position de l'hélice par rapport au conduit d'aspiration.

Généralement, le moteur et l'hélice sont positionnés entièrement à l'intérieur du conduit d'aspiration. Cela nécessite un diamètre d'hélice plus grand que celui du bloc moteur afin d'assurer une aspiration efficace par contournement, et *in fine* des dimensions importantes du conduit d'aspiration recevant l'hélice.

Le document US10094130 (Water Tech) présente une solution dans laquelle le moteur est fixé à l'extérieur du conduit d'aspiration et l'hélice, de grand diamètre, est placée à cheval sur la sortie dudit conduit pour éviter que les feuilles s'accumulent sous l'hélice lors de l'aspiration. Toutefois, le fait que l'hélice soit partiellement à l'extérieur du conduit d'aspiration implique une baisse de l'efficacité d'aspiration en raison d'une absence de canalisation du tourbillon créé dans la poche filtrante en dehors du conduit.

L'accumulation des feuilles et autres débris volumineux sous l'hélice peut être évitée par d'autres solutions alternatives et plus efficaces. Par exemple, le document EP3832053 (Kokido) propose une solution dans laquelle un déflecteur central est placé entre le moteur et l'hélice de sorte à empêcher des débris volumineux de s'entasser au-dessous de ladite hélice en les évacuant vers la périphérie du conduit d'aspiration.

L'accumulation des débris volumineux sous l'hélice reste certes un problème majeur, surtout lorsqu'il s'agit d'aspirateurs de taille réduite, mais moins critique que les risques liés aux câbles électriques au contact de l'eau dans les solutions connues, et ce malgré l'étanchéité des connexions car les câbles ne sont pas entièrement isolés de l'eau.

### PRÉSENTATION DE L'INVENTION

La présente invention vise à pallier les inconvénients de l'art antérieur exposés ciavant et propose une conception permettant de réduire le diamètre du conduit d'aspiration et de supprimer les risques liés à un défaut d'étanchéité de la liaison entre le moteur et la batterie.

À cet effet, la présente invention a pour objet un aspirateur submersible pour le nettoyage de bassins artificiels tels que les piscines, comprenant une tête d'aspiration raccordée à un conduit d'aspiration débouchant dans un élément filtrant, un moteur couplé à une hélice située à l'intérieur du conduit d'aspiration et dont la rotation produit l'aspiration, et une batterie alimentant le moteur, pouvant être sous forme d'accumulateurs jetables, dans lequel aspirateur le moteur et la batterie sont placés dans un compartiment étanche, lui-même placé en majeure partie à l'intérieur de l'élément filtrant.

Selon un mode de réalisation, le compartiment étanche est fixé à un support qui le maintient suspendu au-dessus du conduit d'aspiration.

Plus particulièrement, le support comporte un couvercle, fermant le compartiment étanche et recevant un connecteur de recharge de la batterie, et au moins un bras s'étendant du couvercle jusqu'au conduit d'aspiration pour y être fixé, en étant écarté du compartiment étanche pour ne pas gêner le passage des débris les plus volumineux.

Selon un mode de réalisation avantageux, l'aspirateur comporte en outre un déflecteur central placé entre l'hélice et le compartiment étanche pour empêcher l'accumulation de débris volumineux à cet endroit.

L'élément filtrant peut comprendre une poche souple ou une cartouche plissée. Selon des modes de réalisations avantageux, l'aspirateur présente une longueur comprise entre 10 et 40 cm et son conduit d'aspiration présente un diamètre compris entre 40 et 200 mm.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un aspirateur autonome à hélice conforme aux principes de l'invention.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à la même échelle. Sur l'ensemble des figures, les éléments identiques ou équivalents portent la même référence numérique.

Il est ainsi illustré en :
- Figure 1 : une vue de face d'un aspirateur selon un premier mode de réalisation de l'invention ;
- Figure 2 : une vue de côté de l'aspirateur ;
- Figure 3 : une vue arrière de l'aspirateur ;
- Figure 4 : une vue de dessus de l'aspirateur ;
- Figure 5 : une vue de dessous de l'aspirateur ;
- Figure 6a : une coupe de l'aspirateur selon le plan A - A de la figure 1 ;
- Figure 6b : une coupe de l'aspirateur selon le plan B - B de la figure 2 ;
- Figure 7 : une vue en éclaté de l'aspirateur ;
- Figure 8 : une vue en perspective avant d'un aspirateur selon un deuxième mode de réalisation de l'invention ;
- Figure 9 : une vue en perspective arrière de l'aspirateur ;
- Figure 10 : une vue de face de l'aspirateur ;
- Figure 11 : une vue de côté de l'aspirateur ;
- Figure 12 : une vue arrière de l'aspirateur ;
- Figure 13 : une vue de dessus de l'aspirateur ;
- Figure 14 : une vue de dessous de l'aspirateur ;
- Figure 15 : une coupe en perspective de l'aspirateur ;
- Figure 16 : une vue en éclaté de l'aspirateur.

### DESCRIPTION DÉTAILLÉE DE MODES DE RÉALISATION

Il convient de noter que certains éléments techniques bien connus de l'homme du métier sont ici décrits pour éviter toute insuffisance ou ambiguïté dans la compréhension de la présente invention.

Dans le mode de réalisation décrit ci-après, on fait référence à un aspirateur autonome à hélice, destiné principalement au nettoyage de piscines. Cet exemple, non limitatif, est donné pour une meilleure compréhension de l'invention et n'exclut pas l'utilisation de l'aspirateur dans d'autres bassins de faible profondeur tels que les jacuzzis, les bassins de récupération musculaire par immersion (cryothérapie), les fontaines, etc.

Dans la présente description, le terme « aspirateur » désigne un balai aspirateur submersible pour le nettoyage des fonds de bassins, et l'expression « aspirateur autonome » désigne un aspirateur dont l'alimentation électrique est assurée par une batterie.

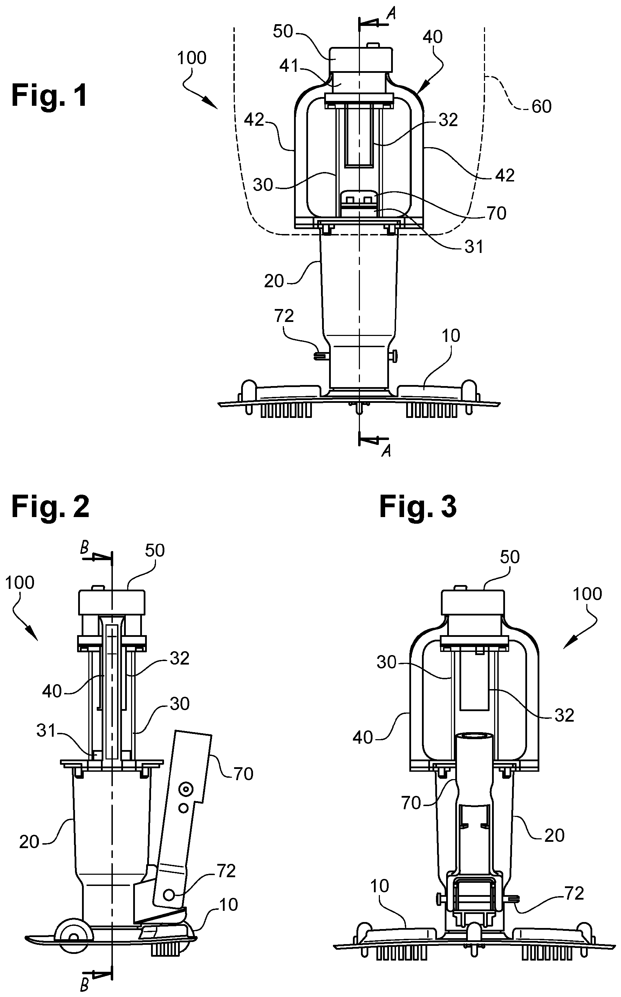

Les figures 1 à 3 représentent, selon différentes vues, un aspirateur 100 comprenant une tête d'aspiration 10 raccordée à un conduit d'aspiration 20, un compartiment étanche 30 renfermant un moteur 31 et une batterie 32, un support 40 fixé au conduit d'aspiration 20 et maintenant le compartiment étanche 30 suspendu au-dessus dudit conduit, un interrupteur électrique 50 monté rotatif sur le support 40, une poche filtrante 60 représentée partiellement et schématiquement sur la figure 1, et un manchon 70 articulé sur le conduit 20 et destiné à recevoir à un manche amovible de préhension de l'aspirateur 100.

L'aspirateur 100 présente ainsi une conception compacte s'étendant suivant un axe longitudinal, dans laquelle le moteur et la batterie, ainsi que leurs liaisons électriques, sont placés dans un compartiment étanche, lui-même placé, totalement ou partiellement à l'intérieur de la poche filtrante.

Le compartiment étanche 30, selon l'exemple illustré, présente une forme sensiblement cylindrique et des dimensions adaptées pour recevoir le moteur 31 et la batterie 32.

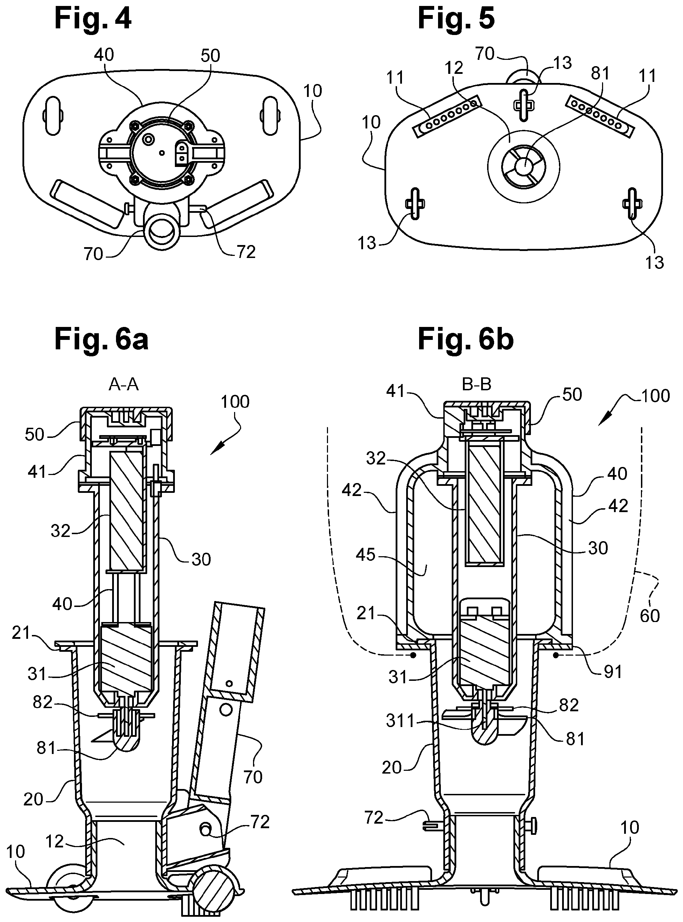

Les figures 6a et 6b représentent une disposition possible du compartiment étanche 30 à l'intérieur de l'aspirateur 100 ainsi que l'agencement du moteur 31 et de la batterie 32 à l'intérieur dudit compartiment.

Le moteur 31 est placé dans une partie inférieure du compartiment étanche 31, avec un arbre 311 orienté vers le bas pour permettre un couplage avec une hélice 81 positionnée à l'intérieur du conduit d'aspiration 20. En effet, le moteur 31 est emboité au fond du compartiment étanche 30, ce dernier étant pourvu d'un trou pour permettre le passage de l'arbre 311 de façon étanche. L'arbre 311 s'étend ainsi en dehors du compartiment étanche 30 sur une longueur suffisante pour permettre le couplage de l'hélice 81.

Sur l'exemple illustré, l'hélice 81 est positionnée assez bas par rapport à une sortie 21 du conduit d'aspiration 20, légèrement au milieu dudit conduit. Toutefois, il est préférable que l'hélice 82 affleure un bord supérieur 21 du conduit d'aspiration 20, correspondant à sa sortie débouchant dans la poche filtrante 60, tout en restant entièrement à l'intérieur dudit conduit. Cela permet d'évacuer plus facilement ces débris vers la poche filtrante 60 et d'éviter ainsi une accumulation des débris volumineux dans l'interstice étroit entre le compartiment étanche 30 et les parois internes du conduit d'aspiration 20, contrairement à la configuration des figures 6a et 6b dans laquelle ledit compartiment est partiellement placé à l'intérieur dudit conduit.

Néanmoins, la configuration des figures 6a et 6b reste acceptable dans la mesure où une majeure partie du compartiment étanche 30 se trouve à l'extérieur du conduit d'aspiration 20.

La batterie 32, selon l'exemple illustré, est quant à elle positionnée dans une partie supérieure du compartiment étanche 30 et connectée au moteur 31 par des câbles électriques non représentés. Les câbles se retrouvent ainsi entièrement logés dans le compartiment étanche 30 et, par là-même, isolés de l'eau de la piscine lors de l'utilisation de l'aspirateur 100 pour plus de sécurité.

La batterie 32 est rechargeable et dispose d'un connecteur adapté situé au niveau d'un couvercle 41 du support 40, sur lequel l'interrupteur 50 est monté. Ce couvercle 41 peut en outre contenir d'autres composants électroniques nécessaires au fonctionnement de l'interrupteur 50, de la batterie 32 et du moteur 31.

Selon l'exemple illustré, la batterie 32 est directement fixée au couvercle 41 du support 40, ledit couvercle fermant le compartiment étanche 30 par raccordement au niveau d'une bride de fixation étanche pour isoler totalement de l'eau le moteur 31, la batterie 32 ainsi que d'autres éléments électroniques de l'aspirateur.

Ainsi, le compartiment étanche 30 fermé par le couvercle 41 du support 40 définit un volume isolé de l'eau et suspendu au-dessus du conduit d'aspiration 20 et à l'intérieur de la poche filtrante 60, sans gêner l'aspiration des débris.

Cette suspension du compartiment étanche 30 est assurée par le support 40 qui comporte à cet effet deux bras 42 écartés s'étendant jusqu'au conduit d'aspiration 20, parallèlement à l'axe longitudinal de l'aspirateur.

De plus, chaque bras 42 est écarté du compartiment étanche 30 de sorte à laisser un espace 45 pour ne pas gêner l'aspiration des débris, en particulier les débris les plus volumineux, vers la poche filtrante 60.

Cette conception particulière du support 40 permet en effet de libérer au maximum le passage des débris du conduit d'aspiration 20 vers la poche filtrante 60, tout en assurant une tenue mécanique suffisante au vu des sollicitations que l'aspirateur en fonctionnement est destiné à subir.

Afin de dégager davantage le passage des débris, le support 40 peut, dans une conception alternative, ne comporter qu'un seul bras. Néanmoins, compte tenu d'un rapport avantages/inconvénients favorable, la conception avec deux bras reste préférable.

Le support 40 peut être fixé au conduit d'aspiration 20 par tout moyen adapté.

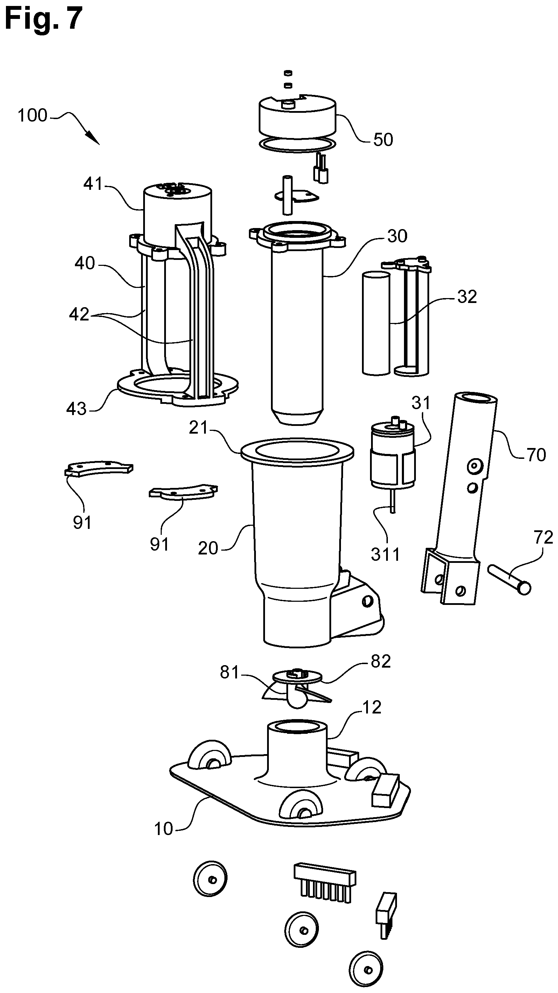

La figure 7 représente l'aspirateur 100 en éclaté et permet ainsi de mieux comprendre l'agencement de ses différents éléments, notamment la fixation du support 40 sur le conduit d'aspiration 20 au moyen d'une embase annulaire 43 dudit support qui vient reposer sur le bord annulaire plat 21 dudit conduit. Des platines 91 sont prévues pour venir serrer, au niveau des extrémités inférieures des bras 42, le bord annulaire 21 contre l'embase annulaire 43 de plus grand diamètre.

Bien entendu, le fonctionnement du reste de l'aspirateur 100 est connu, notamment en ce qui concerne la tête d'aspiration 10 qui, en tant qu'interface de nettoyage destinée à venir au contact de surfaces sur lesquelles des débris sont entreposés, peut être équipée de tout organe adapté à cet effet et facilitant l'opération de nettoyage tel que des brosses et des raclettes, mais également de tout moyen de déplacement tel que des roues ou des roulettes. De plus, la tête d'aspiration peut présenter différentes formes (circulaire, triangulaire, etc.) et comporter une ou plusieurs bouches d'aspiration.

Les figures 4 et 5 permettent de bien visualiser la forme de la tête d'aspiration 10 selon l'exemple illustré, celle-ci présente une forme rectangulaire à l'avant, sensiblement arrondie aux sommets, et en trapèze à l'arrière, de sorte que les côtés inclinés du trapèze permettent une disposition convergente de deux brosses 11 pour ramener les débris vers une bouche d'aspiration 12 lors de l'avancement de l'aspirateur.

Sur ce même exemple, la tête d'aspiration 10 repose sur trois roues 13 agencées en triangle.

D'un autre côté, le manchon 70 est articulé sur le conduit d'aspiration 20 autour d'un axe 72 transverse perpendiculaire à l'axe longitudinal de l'aspirateur 100.

Enfin, grâce à cette conception, l'aspirateur 100 présente une taille réduite avec notamment une longueur comprise en 10 et 40 cm, de préférence d'environ 30 cm, et un conduit d'aspiration 20 de diamètre variable compris entre 40 et 200 mm environ.

Il ressort clairement de la présente description que certains éléments de l'aspirateur autonome à hélice peuvent être modifiés, remplacés ou supprimés, sans pour autant sortir du cadre de l'invention.

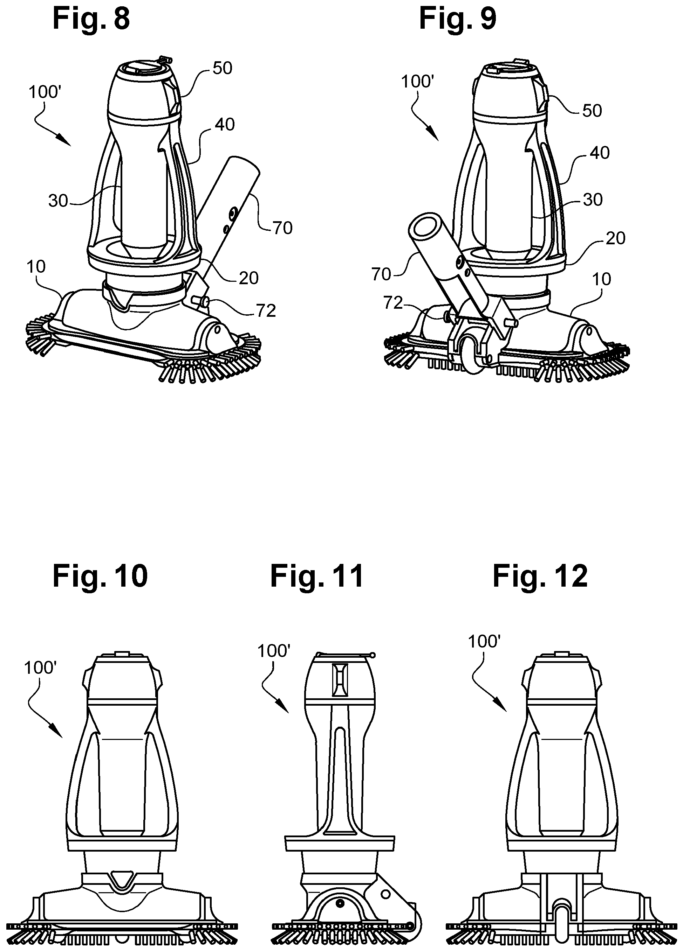

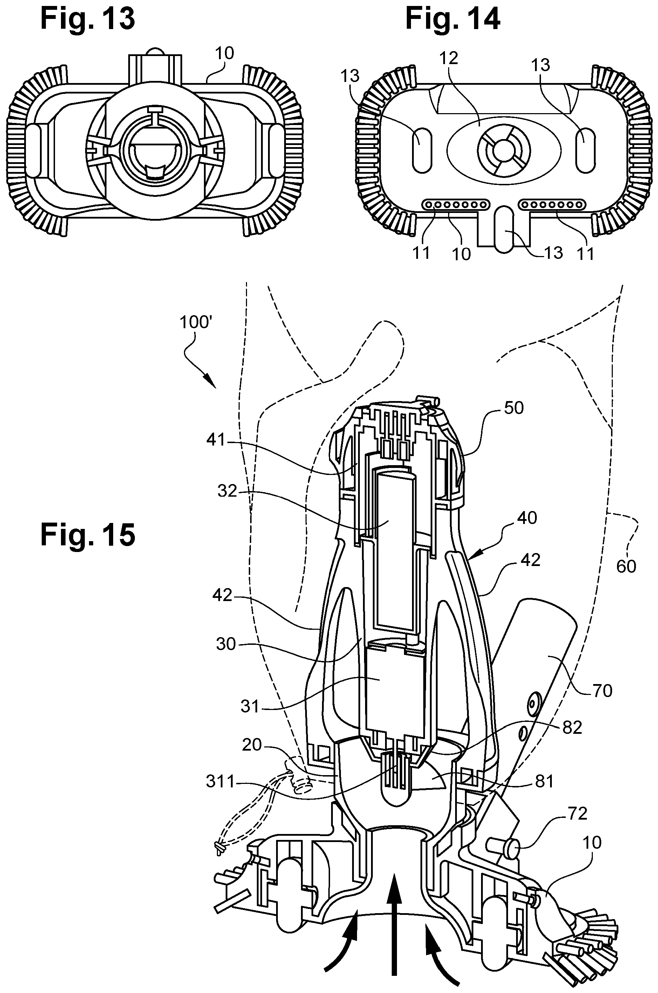

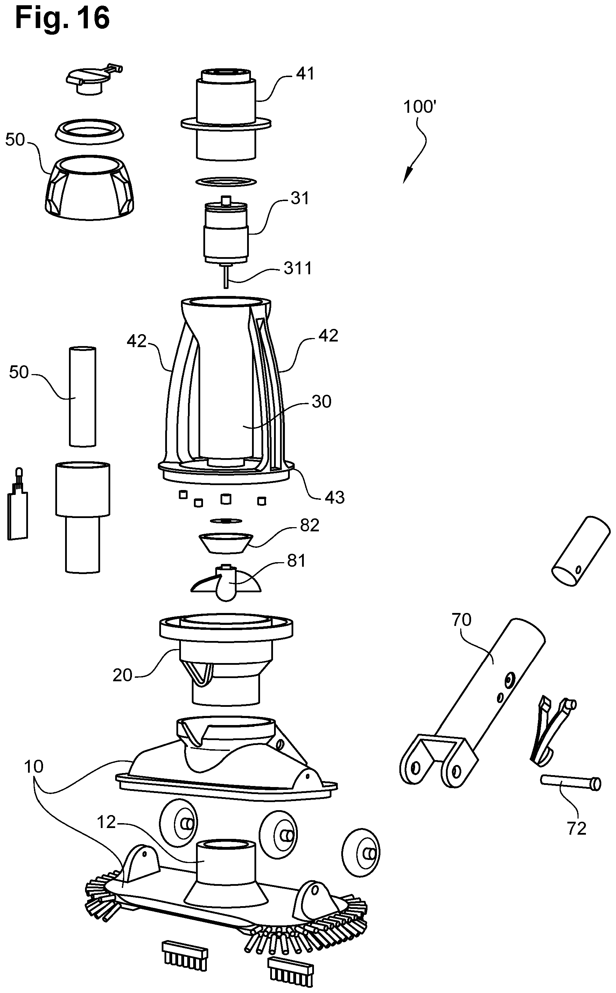

Les figures 8 à 16 représentent par exemple un aspirateur 100' selon un autre mode de réalisation de l'invention, dans lequel certains éléments secondaires sont modifiés, notamment la forme globale de l'aspirateur.

## Revendications

1. Aspirateur (100, 100') submersible pour le nettoyage de bassins artificiels tels que les piscines, comprenant une tête d'aspiration (10) raccordée à un conduit d'aspiration (20) débouchant dans un élément filtrant (60), un moteur (31) couplé à une hélice (81) située à l'intérieur du conduit d'aspiration et dont la rotation produit l'aspiration, et une batterie (32) alimentant le moteur, **caractérisé en ce que** le moteur (31) et la batterie (32) sont placés dans un même compartiment étanche (30), lui-même placé en majeure partie à l'intérieur de l'élément filtrant (60).

2. Aspirateur selon la revendication 1, dans lequel le compartiment étanche (30) est fixé à un support (40) qui le maintient suspendu au-dessus du conduit d'aspiration (20).

3. Aspirateur selon la revendication 2, dans lequel le support (40) comporte un couvercle (41), fermant le compartiment étanche (30) et recevant un connecteur de recharge de la batterie (32), et au moins un bras (42) s'étendant dudit couvercle jusqu'au conduit d'aspiration (20) pour y être fixé, en étant écarté du compartiment étanche.

4. Aspirateur selon l'une quelconque des revendications précédentes, dans lequel la batterie (32) est sous forme d'accumulateurs jetables.

5. Aspirateur selon l'une quelconque des revendications précédentes, dans lequel l'élément filtrant (60) comprend une poche souple ou une cartouche plissée.

6. Aspirateur selon l'une quelconques des revendications précédentes, **caractérisé en ce qu'**il présente une longueur comprise entre 10 et 40 cm et **en ce que** son conduit d'aspiration (20) présente un diamètre compris entre 40 et 200 mm.

## Patentansprüche

1. Unterwassersauger (100, 100') zur Reinigung von künstlichen Becken wie Schwimmbädern, umfassend einen Saugkopf (10), der an eine Saugleitung (20) angeschlossen ist, die in ein Filterelement (60) mündet, einen Motor (31), der an einen Propeller (81) gekoppelt ist, der sich im Inneren der Saugleitung befindet und dessen Drehung die Absaugung erzeugt, und einen Akku (32), der den Motor speist, **dadurch gekennzeichnet, dass** der Motor (31) und der Akku (32) in demselben dichten Fach (30) angeordnet sind, das sich größtenteils im Inneren des Filterelements (60) befindet.

2. Sauger nach Anspruch 1, wobei das dichte Fach (30) an einer Halterung (40) befestigt ist, die es über der Saugleitung (20) hängend hält.

3. Sauger nach Anspruch 2, wobei die Halterung (40) einen Deckel (41) aufweist, der das dichte Fach (30) schließt und einen Akkuladeanschluss (32) aufnimmt, und mindestens einen Arm (42), der sich von dem Deckel bis zur Saugleitung (20) erstreckt, um dort befestigt zu werden, wobei er vom dichten Fach entfernt ist.

4. Sauger nach einem der vorhergehenden Ansprüche, wobei der Akku (32) in Form von Einwegakkumulatoren vorliegt.

5. Sauger nach einem der vorhergehenden Ansprüche, wobei das Filterelement (60) einen weichen Beutel oder eine Faltenpatrone umfasst.

6. Sauger nach einem der vorhergehenden Ansprüche, **dadurch gekennzeichnet, dass** er eine Länge zwischen 10 und 40 cm aufweist und dass seine Saugleitung (20) einen Durchmesser zwischen 40 und 200 mm aufweist.

## Claims

1. A submersible vacuum cleaner (100, 100') for cleaning artificial pools such as swimming pools, comprising a suction head (10) connected to a suction duct (20) opening into a filter element (60), a motor (31) coupled to an impeller (81), which is located inside the suction duct and the rotation of which produces a suction, and a battery (32) powering the motor, **characterized in that** the motor (31) and the battery (32) are placed in the same watertight compartment (30), which is in turn placed mostly inside the filter element (60).

2. The vacuum cleaner according to claim 1, wherein the watertight compartment (30) is fastened to a support (40), which holds it suspended above the suction duct (20).

3. The vacuum cleaner according to claim 2, wherein the support (40) comprises a cover (41), closing the watertight compartment (30) and receiving a connector for recharging the battery (32), and at least one arm (42) extending from said cover up to the suction duct (20) in order to be fastened thereto, while being spaced apart from the watertight compartment.

4. The vacuum cleaner according to any one of the preceding claims, wherein the battery (32) is in the form of disposable accumulators.

5. The vacuum cleaner according to any one of the preceding claims, wherein the filter element (60) comprises a soft pouch or a pleated cartridge.

6. The vacuum cleaner according to any one of the preceding claims, **characterized in that** it has a length of between 10 and 40 cm and **in that** its suction duct (20) has a diameter of between 40 and 200 mm.
